# EUROPÄISCHE PATENTANMELDUNG

(11) **EP 0 957 625 A2**
(43) Veröffentlichungstag der Anmeldung: **17.11.1999**
(21) Anmeldenummer: 99106222.5
(22) Anmeldetag: 12.04.1999
(51) Int. Cl.: H04M 17/02, H04M 15/00

(54) **Verfahren und Vorrichtung zum Überwachen und sichern von öffentlichen Telefonsystemen**

(30) Priorität: 14.05.1998 DE 19821566
(71) Anmelder: Deutsche Telekom AG, 53113 Bonn (DE)
(72) Erfinder: Wanko, Clemens, Dipl.-Ing. (FH), 63322 Rödermark (DE); Korst, Uwe K.H., Dipl.-Ing., DE/64625 Bensheim (DE)

(57) **Zusammenfassung**

Es werden ein Verfahren und eine Vorrichtung zum Überwachen und Sichern von öffentlichen Endgeräten oder Endgeräten in öffentlichen Telefonsystemen beschrieben. Ein zentrales Sicherheitssystem (1) mit einem Rechner und Speicher für Statistikauswertungen steht über eine Verbindung (7) mit anderen Datenquellen für Statistikauswertungen in Verbindung. Über Verbindungen (8) ist das zentrale Sicherheitssystem (1) mit öffentlichen Endgeräten bzw. Telefonsystemen (3 bis 3'') wie Telefon, Kartentelefon, Fax oder Multimediagerät verbunden. In jedem öffentlichen Endgerät bzw. System, wie einem Telefon, Kartentelefon, Fax oder Multimediagerät sind Prozessor-, Logik- und Speicherchips zur Profilerstellung, zum Realtime-Abgleich und zum Auslösen eines Reaktionssignals bei Mißbrauch vorhanden. Das Reaktionssignal löst dann jeweils entweder eine Sperre oder eine Zerstörung, zum Beispiel einer Telefonkarte in Echtzeit aus. Das zentrale Risk-Management, bestehend aus einer Datenbank mit entsprechenden Auswertemöglichkeiten, zum Beispiel Datawarehouse, sorgt lediglich für die Initialisierung der Nutzungsprofile in den jeweiligen Endgeräten (3 bis 3''), für den Empfang und die Verwaltung von Profilabweichungen aus den Endgeräten (3 bis 3''), für endgeräteübergreifende Vergleiche von Profilen und Profilüberschreitungen sowie für grundlegende administrative Aufgaben bei der Profilerstellung und Auswertung. Damit ist zwischen einem Endgerät (3 bis 3'') und dem zentralen Sicherheitssystem (1) und damit dem zentralen Risk-Management nur noch eine Online-Verbindung für administrative Zwecke oder für die Rückmeldung von Profilüberschreitungen erforderlich. Eine permanente Übertragung aller Nutzungsdaten zu einem im Hintergrund wirkenden zentralen Sicherheitssystem und damit zum zentralen Risk-Management ist nicht mehr nötig; die Senkung der Übertragungskosten um ein Vielfaches wird hierdurch möglich.

## Beschreibung

Die Erfindung betrifft ein Verfahren und eine Vorrichtung zum Überwachen und Sichern von öffentlichen Telefonsystemen nach dem Oberbegriff des Patentanspruchs 1.

Ein öffentliches Telefonsystem besteht heute in der Regel aus einer Vielzahl von Endgeräten, wie zum Beispiel einem Münztelefon, einem Kartentelefon, einem Multimediagerät, einem öffentlichen Faxgerät u.s.w.. Diese Endgeräte sind öffentlich zugänglich an unterschiedlichsten Orten installiert.

Der Betreiber dieser Geräte hat deshalb keine Möglichkeit der direkten Kontrolle und Überwachung. Die öffentlichen Telefonsysteme bzw. die genannten Endgeräte sind auch aus diesem Grund häufig Ziel von Angriffen verschiedenster Art, wie zum Beispiel:
- Diebstahl
- Versuch der entgeltfreien Nutzung
- Manipulation der Geräte mit dem Ziel, dem Hintergrundsystem falsche Daten vorzuspielen (Interesse zum Beispiel für den Endgerätebetreiber)
- Manipulation der Geräte mit dem Ziel der Durchführung einer Analyse der Verfahren zum Hintergrundsystem oder zur Karte.

Das überwiegende Ziel der Angriffe ist die entgeltfreie Nutzung eines Endgerätes. Dies gelingt dem Angreifer durch Anwendung der unterschiedlichsten Tricks und Verfahren, zum Beispiel bei Münztelefonen durch Fadenverbindung zum Zurückholen der Münze und bei Kartentelefonen durch gefälschte oder simulierte Telefonkarten.

Um eine fälschliche Nutzung der öffentlichen Telefonsysteme zu unterbinden, wird die Endgerätenutzung beobachtet und ein typisches Nutzungsprofil für das Endgerät erstellt. Außerdem erfolgt ein ständiger Abgleich des typischen Nutzungsprofils mit dem aktuellen Nutzungsprofil und ein Angleich des typischen Nutzungsprofil an schleichende Nutzungsänderung. Bei Überschreitung des typischen Nutzungsprofiles erfolgt die Einleitung von Reaktionen, um die Manipulationen zu verhindern oder unschädlich zu machen.

Derzeit erfolgen die beschriebenen Operationen bzw. Untersuchungen dadurch, daß von den öffentlichen Telefonsystemen die verschiedensten Daten, zum Beispiel Gesprächsdatensätze, Umsätze der Gebührenzähler, Statistiken u.s.w. gesammelt werden und in einem zentralen Sicherheitssystem ausgewertet werden. Der Nachteil dieser Lösung besteht darin, daß die Daten von den unterschiedlichsten Datenquellen stammen und somit auch die unterschiedlichsten Formate aufweisen und die dezentral erzeugten Daten müssen zur Auswertung an das zentrale Sicherheitssystem weitergeleitet werden. Eine Datenauswertung zur Erstellung von Nutzungsprofilen ist daher nur durch entsprechend leistungsfähige Rechnersysteme möglich. Eine derartige Lösung ist deshalb technisch aufwendig und teuer. Würde man auf der anderen Seite solche Analysen manuell durchführen, zum Beispiel durch ein Durchsehen von Ausdrucken, dann wäre ein hoher Personalaufwand erforderlich, mit dem zusätzlichen Nachteil, daß die Analysen nicht lückenlos und damit effektiv durchzuführen wären. Ein weiterer Nachteil der beschriebenen Lösung besteht darin, daß die Daten zeitverzögert in dem zentralen Sicherheitssystem eintreffen und Abwehrmaßnahmen somit nur mit zeitlicher Verzögerung eingeleitet werden können.

Es wird hier auf die Veröffentlichungen "Das Gesetz zur digitalen Signatur (Signaturgesetz - SigG)" - vom Papierdokument zum beweissicheren elektronischen Dokument - von Wendelin Bieser, Bundesministerium des Innern, Graurheindorfer Str. 198, 53117 Bonn, Stand: 12. September 1997, Steinau Verlag GmbH, Mölln, und "Haftungsfragen und Risikoverteilung bei Kartenmißbrauch" von Prof. Dr. Helmut Rüssmann, Steinau Verlag GmbH, Mölln, verwiesen.

Der Erfindung liegt deshalb die Aufgabe zugrunde, ein Verfahren und eine Vorrichtung für öffentliche Telefon- oder dergleichen Systeme bzw. Geräte, die an ein zentrales Sicherheitssystem angeschlossen sind, zu schaffen, die eine Online-Verbindung zwischen Endgerät und seinem zentralen Sicherheitssystem im Hintergrund und damit einem zentralen Risk-Management nur noch für administrative Zwecke oder für die Rückmeldung von Profilüberschreitungen benötigen, die eine schnellere Überwachung und Sicherung des jeweiligen öffentlichen Systems bzw. Endgeräts ermöglichen und die Übertragungskosten um ein Vielfaches senken.

Die erfindungsgemäße Lösung der Aufgabe ist im Kennzeichen des Patentanspruchs 1 für das Verfahren und im Patentanspruch 7 für die Vorrichtung charakterisiert.

Weitere Lösungen für das Verfahren bzw. für die Vorrichtung sind in den Patentansprüchen 2 bis 6 und 8 bis 10 charakterisiert und angegeben.

Das zu überwachende und zu sichernde öffentliche Telefonsystem, wie zum Beispiel ein Kartentelefonsystem mit mehreren Endgeräten, ist nach wie vor an einen Zentralrechner, der als Teil eines zentralen Sicherheitssystemes operiert, angeschlossen, lediglich zum Datenaustausch. Der Zentralrechner versorgt die Endgeräte des jeweiligen zu überwachenden und zu sichernden öffentlichen Telefonsystems mit den erforderlichen Betriebsparametern und die Endgeräte übergeben an den Zentralrechner Betriebsdaten, wie beispielweise Umsätze, Gesprächsdatensätze, Fehlermeldungen u.s.w.. Das typische Nutzungsprofil des zu überwachenden und zu sichernden öffentlichen Telefonsystems, insbesondere die Nutzungaprofile der dazugehörigen Endgeräte werden in dem jeweiligen Endgerät selbst verwaltet und hier wird auch der Profilabgleich durchgeführt. Auf Profilabweichungen reagiert das Endgerät selbst und sofort. Damit braucht das zentrale Risk-Management im zentralen Sicherheitssystem lediglich für die Voreinstellung, das heißt die Initialisierung der Nutzungsprofile in den Endgeräten, für den Empfang und die Verwaltung von Profilabweichungen aus den Endgeräten, für endgeräteübergreifende Vergleiche von Profilen und Profilüberschreitungen und grundlegende administrative Aufgaben bei der Profilerstellung und Auswertung zu sorgen.

Dadurch entsteht der besondere Nutzen, daß eine Online-Verbindung zwischen Endgerät und einem Hintergrundsystem als zentrales Sicherheitssystem und damit mit dem zentralen Risk-Management nur noch für administrative Zwecke oder für die Rückmeldung von Profilüberschreitungen notwendig ist. Eine permanente Übertragung aller Nutzungsdaten zu einem zentralen Sicherheitssystem im Hintergrund und damit zum zentralen Risk-Management ist nicht mehr erforderlich. Eine Senkung der Übertragungskosten um ein Vielfaches ist die Folge.

Weitere Vorteile, Merkmale und Anwendungsmöglichkeiten der vorliegenden Erfindung ergeben sich aus der nachfolgenden Beschreibung in Verbindung mit dem in der Zeichnung dargestellten Ausführungsbeispiel.

Die Erfindung wird im folgenden anhand von in der Zeichnung dargestellten Ausführungsbeispielen näher beschrieben. In der Beschreibung, in den Patentansprüchen, der Zusammenfassung und in der Zeichnung werden die in der hinten angeführten Liste der Bezugszeichen verwendeten Begriffe und zugeordneten Bezugszeichen verwendet.

In der Zeichnung bedeuten:
- Fig. 1: eine grundsätzliche Darstellung des bisher angewendeten Verfahren zur Sicherung und Überwachung von öffentlichen Telefonsystemen und Endgeräten und
- Fig. 2: eine prinzipielle Darstellung des neuen Systems bzw. Verfahrens zur Überwachung und Sicherung öffentlicher Telefonsysteme und Geräte.

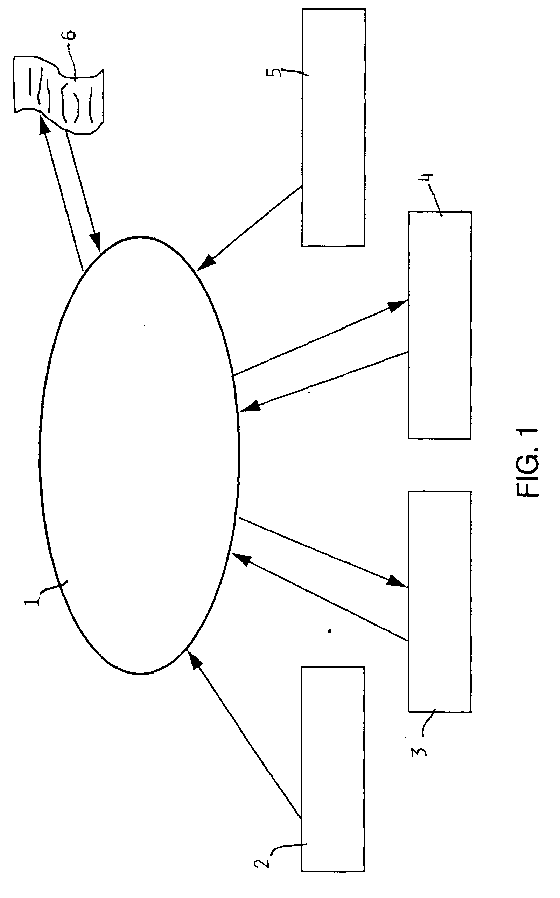

Bevor die detaillierte Funktionsweise und Wirkungsweise des erfindungsgemäßen Verfahrens erklärt wird, soll zunächst anhand von Fig. 1 eine Beschreibung der grundsätzlichen Wirkungsweise der bisher bekannten Lösung beschrieben werden.

Um einen Diebstahl, Betrug oder eine Manipulation von öffentlich betriebenen Endgeräten bzw. Telefonsystemen zu vermeiden, wurde bisher ein zentrales Sicherheitssystem im Hintergrund benutzt. Dieses zentrale Sicherheitssystem ist mit einem Rechner und entsprechenden Speicherkapazitäten ausgerüstet, um die Datenauswertung, die Erstellung und Auswertung von Nutzungsprofilen, den ständigen Abgleich des typischen Nutzungsprofils eines Gerätes bzw. Telefonsystems mit dem aktuellen Nutzungsprofil auszuführen und um die Einleitung entsprechender Reaktionen bei Überschreitung des typischen Nutzungsprofiles durchführen zu können. Dazu ist das zentrale Sicherheitsystem 1 mit den Rechnungsdienst 2 verbunden, der entsprechende Rechnungsdaten bereitstellt. Außerdem ist das zentrale Sicherheitssystem 1 bidirektional mit den Endgeräten 3 eines öffentlichen Kommunikationssystems, wie zum Beispiel Münztelefon, Kartentelefon, Multimediagerät, öffentliches Faxgerät u.s.w. verbunden. Die bidirektionale Verbindung ist symbolisch durch die beiden Pfeile dargestellt. Das zentrale Sicherheitssystem 1 steht über eine weitere bidirektionale Verbindung, dargestellt durch die beiden Pfeile, mit einer Vermittlungstechnik 4 in Verbindung. Außerdem bekommt das zentrale Sicherheitssystem 2. über eine unidirektionale Verbindung von einer Bestandsdatenbank 5 Daten zur Auswertung. Außerdem wird das zentrale Sicherheitssystem 1 mit Daten aus einem manuellen Listenabgleich 6 versorgt und stellt seinerseits sich daraus ergebende neue Daten zur Verfügung. Wie bereits ausgeführt, werden solche manuellen Analysen durch ein Durchsehen von Ausdrucken ausgeführt, wozu ein besonders hoher personeller Aufwand erforderlich ist, der eine lückenlose und aktuelle Auswertung unmöglich macht. Von einem öffentlichen Endgerät 3 werden die Nutzungsdaten je Endgerät und je Gespräch dem zentralen Sicherheitssystem 1 weitergeleitet und über die andere Richtung erfolgt zeitverzögert die Reaktion, zum Beispiel zur Sperrung eines Endgerätes 3 für weitere Verbindungen. Von der Vernittlungstechnik 4 werden die Verbindungsdaten je Endgerät 3 je Gespräch bereitgestellt und die Reaktion erfolgt wieder zeitverzögert, zum Beispiel zur Sperrung eines Ziels - wie Service 0190 - für weitere Verbindungen. Die zum manuellen Listenabgleich 6 erforderlichen Listen enthalten Profil- und Statistikinformationen. Bei festgestelltem Mißbrauch bzw. Betrug erfolgt eine Reaktionsanforderung an das zentrale Sicherheitssystem 1.

Damit ist offensichtlich, daß bei dieser Lösung die Daten nur zeitverzögert im Zentralsystem, insbesondere im zentralen Sicherheitssystem 1 eintreffen und die Abwehrmaßnahme jeweils auch nur mit zeitlicher Verzögerung möglich ist.

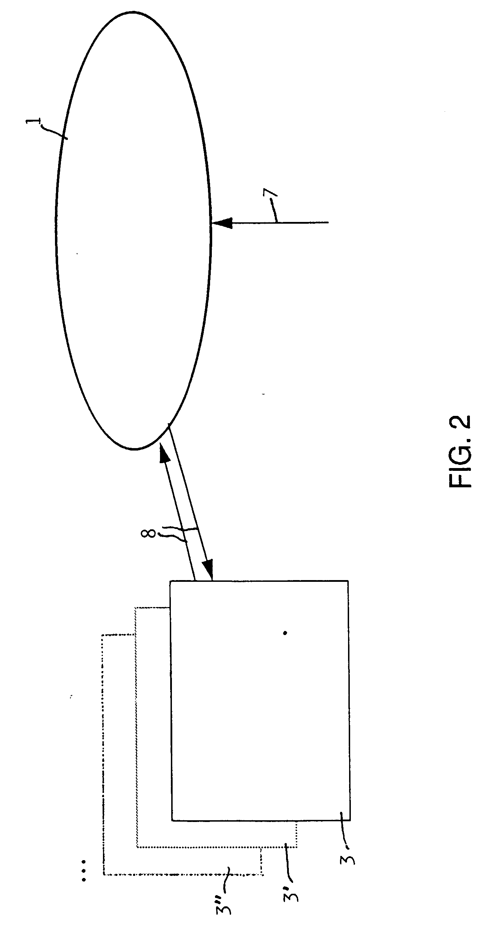

In Fig. 2 ist die prinzipielle Darstellung der Lösung der Aufgabe der vorliegenden Erfindung dargestellt. Sie besteht wiederum aus einem zentralen Sicherheitssystem 1, das Statistikauswertungen durchführt. Das zentrale Sicherheitssystem 1 besteht wiederum aus einem Zentralrechner mit angeschlossenem Speicher und ist mit anderen Datenquellen für Statistikauswertungen verbunden, was durch den Pfeil 7 symbolisch dargestellt ist. Über eine bidirektionale Verbindung, symbolisch durch die beiden Pfeile 8 dargestellt, ist das zentrale Sicherheitssystem 1 mit den öffentlichen Endgeräten 3, 3', 3'' verbunden. Anstelle der öffentlichen Endgeräte 3 bis 3'' kann selbstverständlich auch ein öffentliches Telefonsystem, wie zum Beispiel ein Kartentelefon angeordnet sein. Die öffentlichen Endgeräte 3 bis 3'' können Telefone, Faxgeräte, Multimediageräte oder auch Münztelefone sein. Die vorliegende Lösung zeichnet sich dadurch aus, daß das typische Nutzungsprofil bereits im jeweiligen Endgerät 3 bis 3'' verwaltet wird und daß das Endgerät selbst den Profilabgleich durchführt. Das Endgerät reagiert auch selbständig und zeitgleich auf Profilabweichungen, so daß das zentrale Risk-Management im zentralen Sicherheitssystem 1 lediglich dafür Sorge zu tragen hat, daß die Voreinstellung bzw. Initialisierung der Nutzungsprofile in den Endgeräten 3 bis 3'' erfolgt, daß der Empfang und die Verwaltung von Profilabweichungen aus den Endgeräten 3 bis 3'' erfolgt, daß endgeräteübergreifende Vergleiche von Profilen und Profilüberschreitungen durchgeführt werden und daß grundlegende administrative Aufgaben bei der Profilerstellung und Auswertung übernommen werden.

Daraus ergibt sich der besondere Nutzen, daß eine Online-Verbindung zwischen den Endgeräten 3 bis 3'' und dem Hintergrundsystem, insbesondere dem zentralen Sicherheitssystem 1 und damit dem zentralen Risk-Management, nur noch für administrative Zwecke benötigt wird, zum Beispiel Profile Up/Down Load, Up/Down Load von Reaktionen auf Profilüberschreitungen mit Angabe der Eckwerte, wie Beginnzeit, Dauer, Ziel, bei Kartentelefonen auch kartenindividuelle Daten. Eine permanente Übertragung aller Nutzungsdaten zu einem Hintergrundsystem und damit zum zentralen Risk-Management ist nicht mehr wie bei der bekannten Lösung erforderlich. Die Übertragungskosten werden dadurch um ein Vielfaches gesenkt.

Der nicht dargestellte Rechner des zentralen Sicherheitssystems 1 versorgt nach dieser Lösung die Endgeräte 3 bis 3'' mit den erforderlichen Betriebsparametern, die Endgeräte 3 bis 3'' übergeben an den Zentralrechner Betriebsdaten, wie zum Beispiel Umsätze, Gesprächsdatensätze, Fehlermeldungen u.s.w.. Die Endgeräte speichen dabei selbst ein Profil als Betriebsparameter, daß bei jeder Nutzung der Endgeräte 3 bis 3'' mit der aktuellen Nutzung verglichen wird. Bei Abweichungen von dem eingestellten Nutzungsprofil werden entsprechende Maßnahmen zur Betrugsabwehr eingeleitet. Da das Profil in den jeweiligen Endgeräten 3 bis 3'' lokal gebildet und gegen die aktuelle Nutzung verglichen wird, ist auch zu dieser Funktion keine Verbindung zum zentralen Sicherheitssystem und keine Operation des zentralen Sicherheitssystems 1 erforderlich. Als Profile werden Zielrufnummergruppen oder einzelne Zielrufnummern eingesetzt. Bei Überschreiten einer bestimmten Nutzungshäufigkeit wird das Gespräch unterbrochen und eine Alarmmeldung an das zentrale Sicherheitssystem 1 abgesetzt. Außerdem kann als zusätzliche Komponente die Gesprächsdauer als Bestandteil des Profils aufgenommen werden, so daß Gespräche nach Ziel und Dauer ausgewertet werden. Anstelle der Zielrufnummern bzw. Zielrufnummergruppen können auch Kartenprofile, zum Beispiel Kartennummern oder Kartennummergruppen verwendet werden. Zur Abwehr besteht eine Variante darin, daß die Karte jetzt direkt vor Ort bei der Benutzung zerstört wird. Damit sind die Datenflüsse vom und zum zentralen Sicherheitssystem 1 praktisch minimiert. Bei festgestellter Profilabweichung in einem Endgerät 3 bis 3'', und zwar nur im Abweichungsfall, wird dies dem zentralen Sicherheitssystem 1 mitgeteilt und andererseits wird über die andere Richtung der bestehenden Verbindung zu den Endgeräten 3 bis 3'' die Initialisierung des Nutzungsprofils und der Steuerinformationen durchgeführt. Für Statistikdaten aus anderen Datenquellen ist nur noch eine Verbindung 7 zum zentralen Sicherheitssystem 1 vorhanden.

### Liste der Bezugszeichen

- 1: zentrales Sicherheitssystem
- 2: Rechnungsdienst
- 3 - 3'': öffentliche Endgeräte
- 4: Vermittlungstechnik
- 5: Bestandsdatenbank
- 6: manueller Listenabgleich
- 7: Verbindung zu anderen Datenquellen für Statistikauswertungen
- 8: bidirektionale Verbindung zwischen zentralem Sicherheitssystem und öffentlichen Endgeräten bzw. Telefonsystemen

## Patentansprüche

1. Verfahren zur Überwachung und Sicherung von öffentlichen Telefonsystemen bzw. öffentlichen Endgeräten, die mit einem zentralen Sicherheitssystem zum Datenaustausch in Verbindung stehen, das mit einem Zentralrechner und Speichern ausgerüstet ist, wobei der Zentralrechner die öffentlichen Endgeräte initialisiert und die Endgeräte ihrerseits Betriebsdaten, wie Umsätze, Gesprächsdatensätze oder Fehlermeldungen an den Zentralrechner abgeben, dadurch gekennzeichnet,
daß im jeweiligen öffentlichen Endgerät bzw. Telefonsystem als Betriebsparameter ein Profil gespeichert wird, das bei jeder Nutzung des jeweiligen Endgerätes (3 bis 3'') mit der aktuellen Nutzung verglichen wird und damit der Profilabgleich im jeweiligen Endgerät (3 bis 3'') durchgeführt wird,
daß das Endgerät selbständig und zeitgleich auf Profilabweichungen reagiert und
daß bei Abweichungen von dem eingestellten Nutzungsprofil Abwehroperationen bzw. entsprechende Abwehrmaßnahmen vom Endgerät (3 bis 3'') eingeleitet und durchgeführt werden.

2. Verfahren nach Patentanspruch 1, dadurch gekennzeichnet,
daß prozessorgesteuert das Profil in dem jeweiligen Endgerät (3 bis 3'') lokal gebildet und gegen aktuelle Nutzung verglichen wird.

3. Verfahren nach den Patentansprüchen 1 und 2, dadurch gekennzeichnet,
daß als Profile Ziel-Rufnummergruppen oder einzelne Ziel-Rufnummern eingesetzt werden und bei Überschreiten einer bestimmten Nutzungshäufigkeit das Gespräch unterbrochen und eine Alarmmeldung an das zentrale Sicherheitssystem (1) übertragen wird.

4. Verfahren nach einem der Patentansprüche 1 bis 3, dadurch gekennzeichnet,
daß als Profile bei Kartentelefonen bzw. Kartentelefonsystemen Kartenprofile, zum Beispiel Kartennummern oder Kartennumnergruppen, eingesetzt werden und
daß bei Überschreiten einer bestimmten Nutzungshäufigkeit das Gespräch unterbrochen und eine Alarmmeldung an das zentrale Sicherheitssystem (1) übertragen wird.

5. Verfahren nach einem der Patentansprüche 3 oder 4, dadurch gekennzeichnet,
daß als Bestandteil des Profils die zusätzliche Komponente Gesprächsdauer eingeführt wird und
daß die Gespräche nach Ziel und Dauer automatisch ausgewertet werden.

6. Verfahren nach einem der Patentansprüche 1 bis 5, dadurch gekennzeichnet,
daß als unmittelbare Operation bei Abweichung von dem eingestellten Nutzungsprofil im jeweiligen Endgerät (3 bis 3''), insbesondere bei einem Kartentelefon, die Karte sofort zerstört wird.

7. Vorrichtung mit einem zentralen Sicherheitssystem und darin angeschlossenen öffentlichen Endgeräten bzw. Telefonsystemen, wie Kartentelefonsysteme, Münztelefone oder Faxgeräte, wobei das zentrale Sicherheitssystem mit einem Zentralrechner und einem Speicher für Statistikauswertungen ausgerüstet ist, dadurch gekennzeichnet,
daß eine Verbindung (8) zwischen dem zentralen Sicherheitssystem (1) und den angeschlossenen öffentlichen Endgeräten bzw. Systemen (3 bis 3'') zur Initialisierung des Nutzungsprofils und zur Übermittlung von Steuerinformationen angeordnet ist und
daß eine temporäre Verbindung (8) von den öffentlichen Endgeräten bzw. Systemen (3 bis 3'') zu den zentralen Sicherheitssystem (1) für Profilabweichungen nur im Abweichungsfall geschaltet ist und
daß das zentrale Sicherheitssystem (1) mit einer weiteren Verbindung (7) mit anderen Datenquellen für Statistikauswertungen in Verbindung ist.

8. Vorrichtung nach Patentanspruch 7, dadurch gekennzeichnet,
daß die öffentlichen Endgeräte oder Systeme (3 bis 3'') mit Logik- und Speicherchips ausgerüstet sind, die ausschließlich zur direkten und unmittelbaren Überwachung und Sicherung des Endgerätes bzw. Systems (3 bis 3'') dienen.

9. Vorrichtung nach einem der Patentansprüche 7 oder 8, dadurch gekennzeichnet,
daß mit den Logik- und Speicherchips zur Überwachung und Sicherung eine im öffentlichen Endgerät bzw. System (3 bis 3'') angeordnete Sperre zur unmittelbaren Auslösung direkt verbunden ist.

10. Vorrichtung nach einem der Patentansprüche 7 oder 8, dadurch gekennzeichnet,
daß das öffentliche Endgerät bzw. System (3 bis 3'') als Kartenendgerät bzw. -system mit einer Vorrichtung zur Zerstörung der Karte ausgerüstet ist, die direkt mit den genannten Logik- und Speicherchips verbunden ist und im Manipulationsfall unmittelbar von dort ausgelöst wird.
